# EUROPEAN PATENT SPECIFICATION

(11) **EP 1 762 929 B1**
(45) Date of publication and mention of the grant of the patent: **12.01.2011**
(21) Application number: 06119865.1
(22) Date of filing: 31.08.2006
(51) Int. Cl.: G06F 9/38, G06F 9/32

(54) **Centralized resolution of conditional instructions**
Zentralisierte Auflösung von bedingten Befehlen
Résolution centralisée d'instructions conditionnelles

(30) Priority: 31.08.2005 US 216399
(43) Date of publication of application: 14.03.2007
(73) Proprietor: Texas Instruments Incorporated, Dallas, Texas 75251 (US)
(72) Inventor: Tran, Thang, Austin, TX 78733 (US); Sandbote, Sam Brandon, Dallas, TX 75204 (US)
(74) Representative: Holt, Michael

(56) References cited:
- EP-A2- 0 133 477
- US-A1- 2003 061 471
- US-A1- 2004 044 884

## Description

This relates to methods and apparatus for handling conditional instructions in data processing.

### BACKGROUND OF THE INVENTION

Processor systems perform various tasks by processing task instructions within pipelines contained in the processor systems. Pipelines generally are responsible for fetching instructions from a storage unit such as a memory or cache, decoding the instructions, executing the instructions, and then writing the results into another storage unit, such as a register. Pipelines generally process multiple instructions at a time. For example, a pipeline may simultaneously execute a first instruction, decode a second instruction and fetch a third instruction from a cache.

Instructions stored in a cache often comprise conditional branch instructions. Based on a result of a condition embedded within a conditional branch instruction, program flow continues on a first path or a second path following the conditional branch instruction. For example, if the conditional statement is "false," the instruction following the conditional branch is executed. If the condition is "true," a branch to an instruction other than the next instruction is performed. Whether the condition is true or false is not known with complete certainty until the conditional branch instruction is executed.

Some processors comprise multiple execution units within a pipeline. For example, a single pipeline may comprise two arithmetic logic units (ALUs) and a multiplier-accumulator (MAC) unit. An instruction progressing through the pipeline that requires a multiplication operation to be performed may be executed by the MAC. Similarly, an instruction progressing through the pipeline that requires an arithmetic operation to be performed may be executed by one of the ALUs.

Due to the size of an operation or the speed with which a particular execution unit performs, conditional instructions may be executed out of order. For example, a software program may comprise a first conditional instruction, followed by a second conditional instruction. The first conditional instruction may be executed in an ALU and the second conditional instruction may be executed in the MAC. In such a case, it is desirable for the ALU to finish executing the first conditional instruction, and for the results of the first conditional instruction (e.g., condition code register flags) to be written to the conditional code register before the second conditional instruction completes execution. However, in some situations, the MAC may finish executing the second conditional instruction before the first conditional instruction is executed, thereby reversing the order in which the first and second conditional instructions were to be completed. In such cases, the conditional code register flags are inaccurately set. Such inaccuracies may compromise the integrity of the software program being executed on the processor.

United States Patent Application No. US 2003/061471 describes a data processor performing condition execution on the basis of flag information, aims at obtaining a data processor having excellent code efficiency, which can reduce branch penalty. When a first instruction decoded is an execution condition specifying instruction specifying the execution condition for a pair of second instructions executed in parallel, a first execution condition determination unit performs determination of the execution condition for second instructions defined by the execution condition specifying instruction on the basis of the flag information and controls assertion/non-assertion of an execution inhibit signal on the basis of whether the execution condition defined by the execution condition specifying instruction is satisfied or not.

### SUMMARY OF THE INVENTION

The problems noted above are addressed by a technique for centralizing the resolution of conditional instructions.

The invention resides in a processor and a method as set out in the appended claims.

### BRIEF DESCRIPTION OF THE DRAWINGS

For a detailed description of exemplary embodiments of the invention, reference will now be made to the accompanying drawings in which:
FIG. 1 shows a block diagram of a single-issue processor in accordance with embodiments of the invention;
FIG. 2 shows a block diagram of the single-issue processor of FIG. 2 and further shows the data path of instructions A and B, in accordance with preferred embodiments of the invention;
FIG. 3 shows a block diagram of an arithmetic logic unit (ALU) used in conjunction with the centralization technique described herein, in accordance with preferred embodiments of the invention;
FIG. 4 shows a flow diagram of a process that may be used to implement the centralization technique described herein in a single-issue processor, in accordance with embodiments of the invention;
FIG. 5 shows a block diagram of a multiple-issue, superscalar processor in accordance with preferred embodiments of the invention;
FIG. 6 shows a flow diagram of a process that may be used to implement the centralization technique described herein in a superscalar processor, in accordance with embodiments of the invention; and
FIG. 7 shows an illustrative embodiment of a system comprising the single-issue and superscalar processors described herein, in accordance with embodiments of the invention.

### DETAILED DESCRIPTION OF THE EMBODIMENTS

Disclosed herein is a technique that comprises reading from the condition code register (CCR) of a processor within a single execution unit and, more specifically, within a single stage of that execution unit. The technique also comprises writing to the CCR at or about the same time as the single stage. By centralizing CCR reading and writing in this manner, problems associated with data coherency are reduced or eliminated. The centralization technique may be implemented in any of a variety of processors, including single-issue (i.e., scalar) processors and superscalar processors, each of which is now discussed in turn.

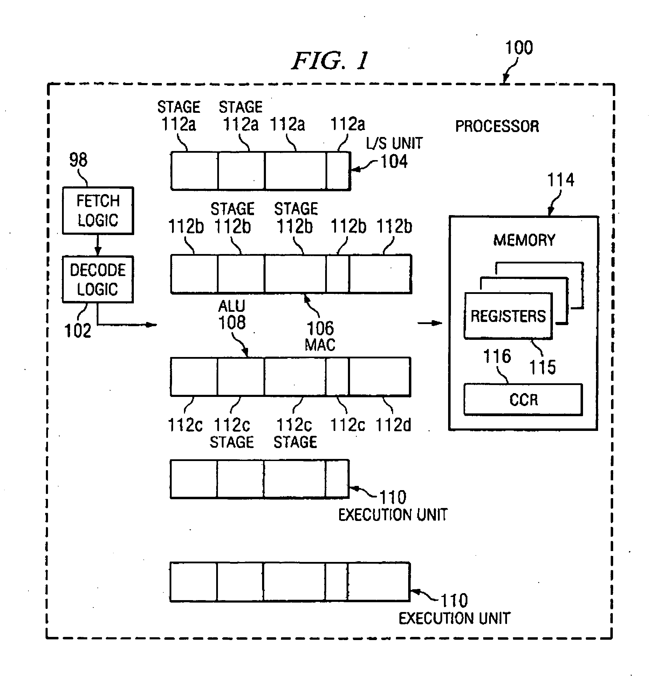

A single-issue processor generally executes instructions in a serial stream, as opposed to a superscalar processor, which issues multiple instructions in parallel for execution. FIG. 1 shows a single-issue processor 100. The processor 100 comprises a fetch logic 98, a decode logic 102 and a plurality of execution units, such as a load/store execution unit (L/S unit) 104, a multiply-accumulation unit (MAC) 106, an arithmetic logic unit (ALU) 108, and any of a variety of other execution units 110. Each execution unit comprises a plurality of stages. For example, the L/S unit 104 comprises a plurality of stages 112a; the MAC 106 comprises a plurality of stages 112b; the ALU 108 comprises a plurality of stages 112c and a last stage 112d. The number of stages in a particular execution unit defines the depth of that execution unit. Each execution unit has a depth that may be the same as the depth of another execution unit or different than the depth of another execution unit, depending on the number of stages therein. The processor 100 also comprises a memory 114, which in turn comprises a CCR 116 and registers 115. The CCR 116 comprises a plurality of bits, some of which are not specifically shown, but the CCR 116 preferably comprises at least a carry bit "C," a zero bit "Z," an overflow bit "V," and a negative bit "N." Further information on the bits generally used in conditional code registers may be obtained from the commonly-owned, co-pending application entitled, "Avoiding Unnecessary Processing of Predicated Instructions," Application No. 11/095,681, filed March 31, 2005.

Instructions, such as machine code (i.e., native) instructions and/or sequenced micro-operation instructions, are decoded by the decode logic 102. Once decoded by the decode logic 102, an instruction is executed by an appropriate execution unit, depending on the type of instruction. For instance, an arithmetic instruction may be executed by the ALU 108, whereas a multiplication instruction is executed by the MAC 106 and a load instruction is executed by the L/S unit 104. Other types of instructions may be executed by other execution units 110 as appropriate. Because the processor 100 is a single-issue processor, instructions are decoded and executed in a serial stream. For instance, an instruction A, and then an instruction B, neither of which are specifically shown in FIG. 1, may be provided to the decode logic 102. The instruction A is decoded first, followed by the instruction B. The execution of instruction A is begun prior to beginning the execution of instruction B.

After an instruction is executed by an execution unit, the execution unit may produce output data. This output data may comprise result data (i.e., results of the operation performed) as well as a CCR bit. For instance, an instruction provided to the ALU 108 may produce result data (i.e., the sum of an addition instruction) as well as a CCR bit, such as a "1" for bit C (i.e., if a "carry" was involved in the addition). The execution units may produce bits for one or more of the CCR bits. The output data then is written to the appropriate register as indicated by the instruction, and the CCR bit is written to the CCR 116.

An illustrative instruction may be:
MULT R0, R1, R2
(1)

Instruction (1) is a multiplication instruction. The instruction, when executed, causes the contents of registers R1 and R2 to be multiplied to generate a product, which product then is stored into register R0. If, in the process of generating a product, a CCR 116 bit also is generated, then this bit is written to the CCR 116.

As previously mentioned, the centralization technique comprises reading from the CCR 116 in a single execution unit, preferably the ALU 108. More particularly, the centralization technique comprises reading from the CCR 116 in a single stage of the single execution unit. The centralization technique also comprises writing to the CCR 116 at or about the same time as when the single stage occurs. This single stage preferably is the latest stage, among most or all stages of most or all of the execution units in the processor 100, during which any CCR 116 bit is generated for a particular instruction. This single stage preferably is last stage (i.e., stage 112d) of the ALU 108. By centralizing most or all CCR 116 read and write operations in this manner, the data coherency problems presented above are reduced or eliminated.

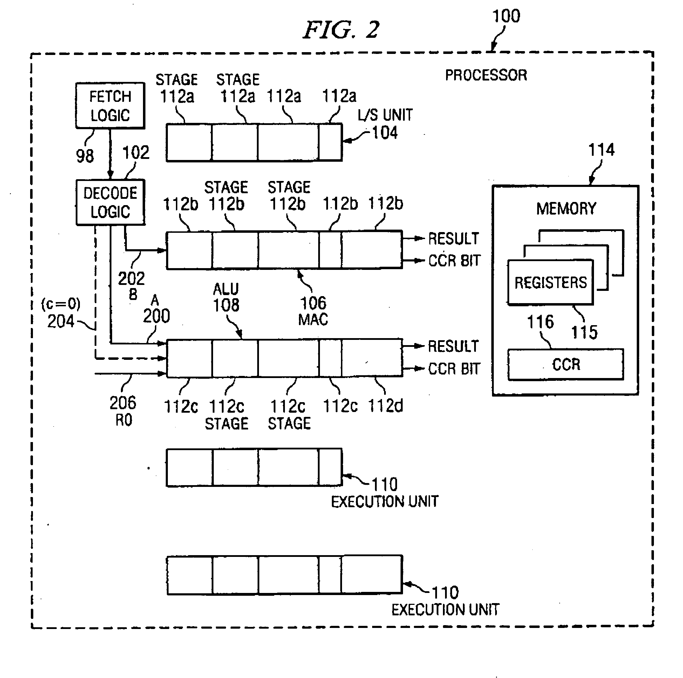

An illustrative example is now described in context of FIG. 2. FIG. 2 is substantially similar to FIG. 1, except that the progression of exemplary instructions A and B through the decode logic 102 and the execution units is shown. In particular, instruction B is a conditional instruction. The conditional statement of instruction B depends on a CCR 116 bit C. For instance, assume that instruction B has a conditional statement (C = 0), meaning that the result produced by executing instruction B, as well as the CCR 116 bit produced by executing instruction B, are not written to memory (e.g., registers) unless the bit C of CCR 116 is a "0." Thus, instruction B is predicated on CCR 116 bit C. Because the processor 100 is a single-issue processor, instruction A is output immediately prior to instruction B.

Instruction A is an arithmetic instruction, meaning that instruction A is transferred from the decode logic 102 to the ALU 108 for execution, as indicated by arrow 200. Instruction B, however, is multiplication instruction. Thus, instruction B is transferred from the decode logic 102 to the MAC 106 for execution, as indicated by arrow 202. Instruction A is executed by the ALU 108 and produces a result as well as a CCR 116 bit, such as a bit C. Instruction B is executed by the MAC 106 and also produces a result as well as a CCR 116 bit. However, instruction B is predicated on bit C of the CCR 116. Unless the bit C of the CCR 116 is a "0," the result and the CCR 116 bit produced by executing instruction B are not written to the appropriate registers.

As previously mentioned the centralization technique comprises evaluating the conditional statement of instruction B in the ALU 108 and, preferably, in the latest stage, among the stages of the execution units in the processor 100, during which any CCR 116 bit is generated for a particular instruction. In order for the ALU 108 to be able to evaluate the conditional statement of instruction B, a phantom copy (i.e., an additional copy) of the conditional statement of instruction B is forwarded to the ALU 108. Thus, instruction B in its entirety is provided to the MAC 106, since instruction B is a multiplication instruction, and a phantom copy of the conditional statement of instruction B (i.e., (C = 0)) is provided to the ALU 108, so that the ALU 108 may evaluate the conditional statement in accordance with the centralization technique. This phantom copy is indicated on FIG. 2 by the dotted arrow 204. One additional item also is provided to the ALU 108: a copy of the contents of destination register for instruction B, for reasons described below. This copy is indicated by arrow 206.

Thus, an instruction B such as:
MULT R0, R1, R2 (C = 0)
(2)
is a multiplication instruction that is provided to the MAC 106, which multiplies the contents of registers R1, R2 to generate a product, which product is stored in register R0 only if the conditional statement (C = 0) is true. A CCR 116 bit also may be generated, which CCR 116 bit is stored to the CCR 116 only if the conditional statement (C = 0) is true. In alternate embodiments, the product may be stored in register R0, and the CCR 116 bit may be stored in the CCR 116, only if the conditional statement (C = 0) is false. A phantom copy of the conditional statement, (C = 0), is provided to the ALU 108. In alternate embodiments, the entire instruction B is provided to the ALU 108, although it is preferred to provide only the conditional statement. Finally, a copy of the destination register of instruction B (i.e., register R0) is provided to the ALU 108, for reasons described further below.

After non-predicated instruction A has been executed by the ALU 108 and a result and a CCR 116 bit have been generated, the result is written to the appropriate register, and the CCR 116 bit is written to the CCR 116. Meanwhile, the instruction B may be executed, thus generating a result as well as a CCR 116 bit. However, unlike the result and CCR 116 bit of instruction A, the result and CCR 116 bit of instruction B are written to the register R0 and the CCR 116, respectively, only if the conditional statement (C = 0) is true. As previously mentioned, a phantom copy of the conditional statement is provided to the ALU 108 to determine whether the conditional statement is true. As has also been previously mentioned, the centralization technique comprises evaluating the conditional statement in the last stage of the ALU 108, across all stages in all execution units, in which a CCR bit is generated. Thus, in this "last" stage of the ALU 108, the ALU 108 compares the conditional statement against the CCR 116. In comparing the conditional statement against the CCR 116, the ALU 108 specifically compares the "C" bit of the conditional statement against the "C" bit of the CCR 116. For the conditional statement (C = 0) to be true, the "C" bit of the CCR 116 must be a "0."

The comparison process performed by the ALU 108 results in either a "pass" or a "fail." In this specific example, a "pass" condition exists if the "C" bit of the CCR 116 is a "0" and a "fail" condition exists if the "C" bit of the CCR 116 is a "1." In broader terms, a "pass" condition exists if the conditional statement is true, and a "fail" condition exists if the conditional statement is false. Assuming that a "pass" condition exists, then the conditional statement is true, and the result and the CCR 116 bit generated by the MAC 106 by executing instruction B are written to the register R0 and the CCR 116 bit, respectively. Specifically, a signal may be transferred from the ALU 108 to the MAC 106 indicating that the MAC 106 may proceed with writing the result and the CCR 116 bit to the appropriate registers.

However, if a "fail" condition exists, then the result and the CCR 116 bit generated by the MAC 106 by executing instruction B may not be written to register R0 and the CCR 116 bit. Instead, a signal may be transferred from the ALU 108 to the MAC 106, instructing the MAC 106 to discard the result and the CCR 116 bit generated by the MAC 106. Instead, the old value of the register R0 should remain in place, and should not be overwritten by the result generated by the MAC 106.

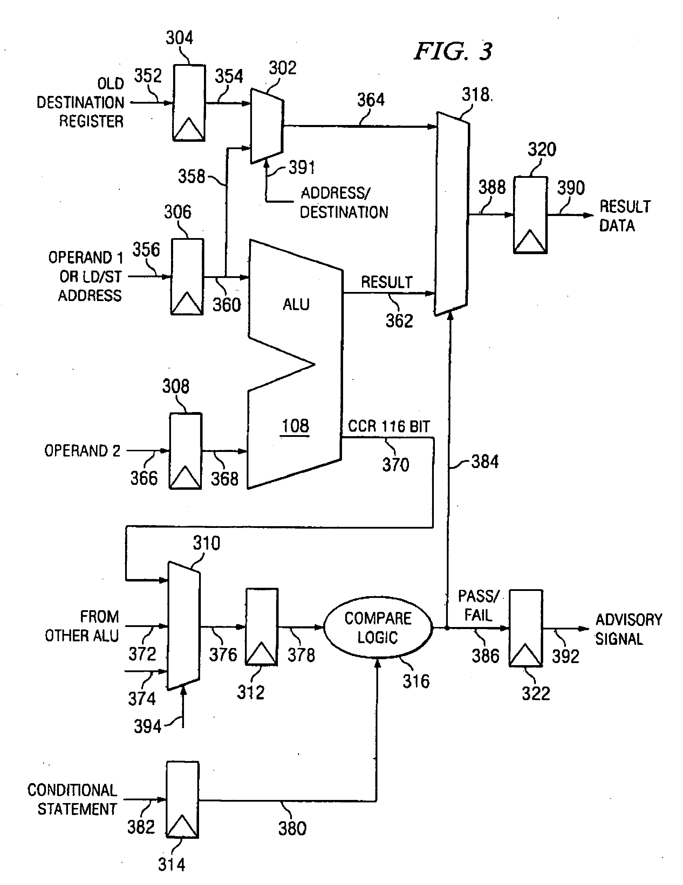

FIG. 3 shows a detailed view of the ALU 108 and circuit logic used by the ALU 108. Specifically, FIG. 3 shows a buffer (e.g., an edge-triggered flip-flop) 304 having an input connection 352 and an output connection 354. The output connection 354 is an input into multiplexer 302. Buffer 306 has an input connection 356 and an output connection 360. The output connection 360 of buffer 306 also is input (via connection 358) into the multiplexer 302, as well as to the ALU 108. The multiplexer 302 selects from among the inputs 354, 358 using selection signal 391. The buffer 308 has an input connection 366 and an output connection 368, which is input into the ALU 108. An output connection 364 of multiplexer 302, as well as one output connection 362 of ALU 108, are both provided as inputs to the multiplexer 318. Multiplexer 318 selects from among inputs 364, 362 using selection signal 384 to produce an output 388. Output 388 is buffered by buffer 320, which produces an output 390. Another output 370 of the ALU 108 is provided to the multiplexer 310, as are inputs 372, 374. The output 376 of the multiplexer 310 are selected from among inputs 370, 372 and 374 using selection signal 394. Output 376 is input into a buffer 312, which has an output 378. Output 378, as well as output 380 provided by buffer 314 based on an input 382, are both input into compare logic 316. Compare logic 316 outputs a signal which is provided to the multiplexer 318 as the selection signal 384. The signal output by compare logic 316 also is provided to buffer 322 as input 386, thus producing an output 392.

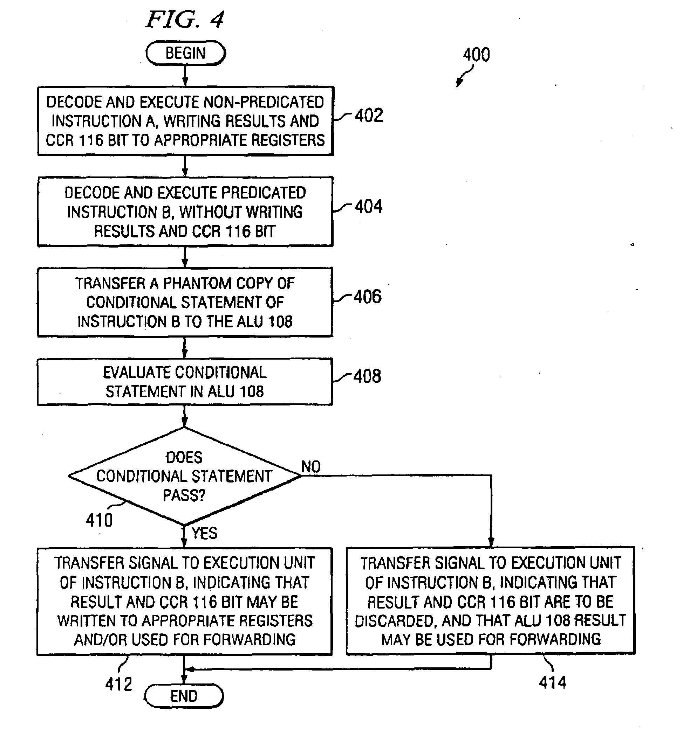

FIG. 3 is now described in context of FIG. 4, which shows a process 400 that may be used to implement embodiments of the centralization technique described above. Referring to FIGS. 3 and 4, the process 400 may begin by decoding and executing non-predicated instruction A and writing results and the CCR 116 bit to the appropriate registers (block 402). Assume instruction A is as follows:
ADD R4, R5, R6
(3)

As previously mentioned, instruction A, being an arithmetic instruction, is executed in the ALU 108. Thus, operands R5 and R6 are input into the ALU 108 via inputs 356, 366. The input values are buffered by buffers 306, 308, respectively. The buffers 306, 308 are edge-clock triggered. When triggered by a clock (not specifically shown), the buffers 306, 308 release outputs 360, 368, respectively, each of which is directly input into the ALU 108. Output 358 of buffer 306 also is provided to the multiplexer 302. The ALU 108 generates a result on output 362, and a CCR 116 bit on output 370. Meanwhile, the process 400 comprises decoding and executing predicated instruction B (block 404). Assume predicated instruction B is as follows:
MULT R0, R1, R2 (C = 0)
(4)

Instruction B, being a multiplication instruction, is executed in the MAC 106. Contents of operand registers R1 and R2 are multiplied to generate a product, which product is stored to register R0 is the conditional statement (C = 0) is true, as described below. Accordingly, the process 400 further comprises transferring a phantom copy of the conditional statement (C =0) of instruction B to the ALU 108 (block 406), such that the ALU 108 may compare the conditional statement (C = 0) to the bit C in the CCR 116. This conditional statement is entered via input 382 into the buffer 314, whereby the statement is forwarded from the buffer 314 to the compare logic 316 via the connection 380. The output 370 of the ALU 108 is input into the multiplexer 310. Other CCR bit outputs from other ALUs (in embodiments with multiple ALUs, such as the superscalar systems described further below) may be input into the multiplexer 310 via input 372. Finally, in cases of flushes, exceptions, and mispredictions, the CCR 116 bit is set according to the input 374 which is the third input into the multiplexer 310. Of these three inputs into the multiplexer 310, the output 376 is selected based on the selection signal 394. The selection signal 394 may be provided by any suitable entity, such as a software program. The output 376 is buffered by the buffer 312, which buffer 312 provides an output on connection 378 to the compare logic 316. In at least some embodiments, buffer 312 comprises a speculative copy (i.e., a "working" copy) of the CCR 116 as it currently exists. Thus, reading or writing to the CCR 116 effectively entails reading or writing to the buffer 312, except at an earlier point in time. On an exception or misprediction, the contents of buffer 312 are restored to the CCR 116.

The compare logic 316 compares the status of the CCR 116 bit with the conditional statement provided via connection 380 (block 408). Because the conditional statement in this example is (C = 0), the compare logic 316 determines whether the bit C in the CCR 116 is a "0." If the bit C in the CCR 116 is a "0," the conditional statement passes. Otherwise, the conditional statement fails. If the conditional statement passes (block 410), then the product generated by the MAC 106 using instruction B is written to the register R0 and/or may be used for data forwarding (block 412) as described further below. If the conditional statement fails, then the product generated by the MAC 106 using instruction B is discarded, as previously described, and the ALU 108 result may be used for forwarding instead of the MAC 106 result (block 414) as described further below.

More specifically, if the conditional statement fails, the compare logic 316 outputs a "0" bit indicating that the conditional statement has failed. If the conditional statement passes, the compare logic 316 outputs a "1" bit indicating that the conditional statement has passed. A bit output by the compare logic 316 is provided to the multiplexer 318 via connection 384, and the bit is provided to the buffer 322 via the connection 386. The connection 384, as previously mentioned, enables the multiplexer 318 to select from among the input signals 362, 364.

Input signal 362 is the result generated by the ALU 108. In this case, the input signal 362 is the result generated by executing instruction A. Input signal 364 is the output of multiplexer 302. The output of multiplexer 302 is selected from among input signals 354, 358 based on the selection signal 391. Input signal 354, received from buffer 304, comprises the contents of the register R4. Input signal 358, received from buffer 306, comprises the load/store address in case that instruction B is being executed by the L/S unit 104. The load/store address is obtained from a load/store address register which is similar to register R0 above. In case that instruction B is being executed by the L/S unit 104, the instruction B is a load/store instruction. For a load/store instruction, the load/store address is updated directly in the load/store address register. Signal 358 (i.e., from signal 356) may comprise a value of the load/store register as it existed prior to an update of the load/store register caused by execution of instruction B. Signal 354 is output by the buffer 304 using the input signal 352. Likewise, signal 358 is generated by the buffer 306 using the input signal 356.

In the case that the selection signal 384 is a "1," then the multiplexer 318 selects the input 362, which is the result of the ALU 108. The multiplexer 318 selects input 362 because the compare logic 316 has determined that the conditional statement of instruction B is true. Because the conditional statement is true, the ALU 108 may proceed by writing the result of instruction A, and the buffer 322 may send a signal 392 to the MAC 106 indicating that the conditional statement is true. In turn, the MAC 106 may write the results of executing instruction B, as well as any CCR 116 bits generated by executing instruction B. In at least some embodiments, the results also may be used for data forwarding, as described further below. In the case that the selection signal 384 is a "0," then the multiplexer 318 selects the input 364, which input 364 depends on the output of multiplexer 302. The output of multiplexer 302 is selected from among inputs 354, 358 as previously described. For instance, in case the selection signal 384 is a "0," indicating that the conditional statement of instruction B is false, then the contents of the destination register R0 may be output from the multiplexer 318. Also, the advisory signal 392 output by the buffer 322 is a "0," indicating to the MAC 106 that the MAC 106 is to discard any results or CCR 116 bits generated by executing the instruction B, and that the ALU 108 may be used for data forwarding. Although the above centralization technique is described in terms of a single-issue processor, the technique also may be applied to other types of processors, such as superscalar processors.

Embodiments of the invention also comprise a forwarding technique, whereby result data generated by the circuit logic of FIG. 3 is forwarded to another execution unit for use by a subsequent, dependent instruction. In at least some embodiments, this data may be forwarded without regards to the result of the conditional statement. For example, referring to FIG. 3, the output 388 of multiplexer 318 comprises either the result 362 of the ALU 108 or the old destination value 352. This result data 388 may be forwarded to the MAC 106 or some other execution unit corresponding to a subsequent instruction dependent on the result data. In some embodiments, this data is forwarded without regard to the result of the conditional statement, since it is already incorporated into the multiplexer 318.

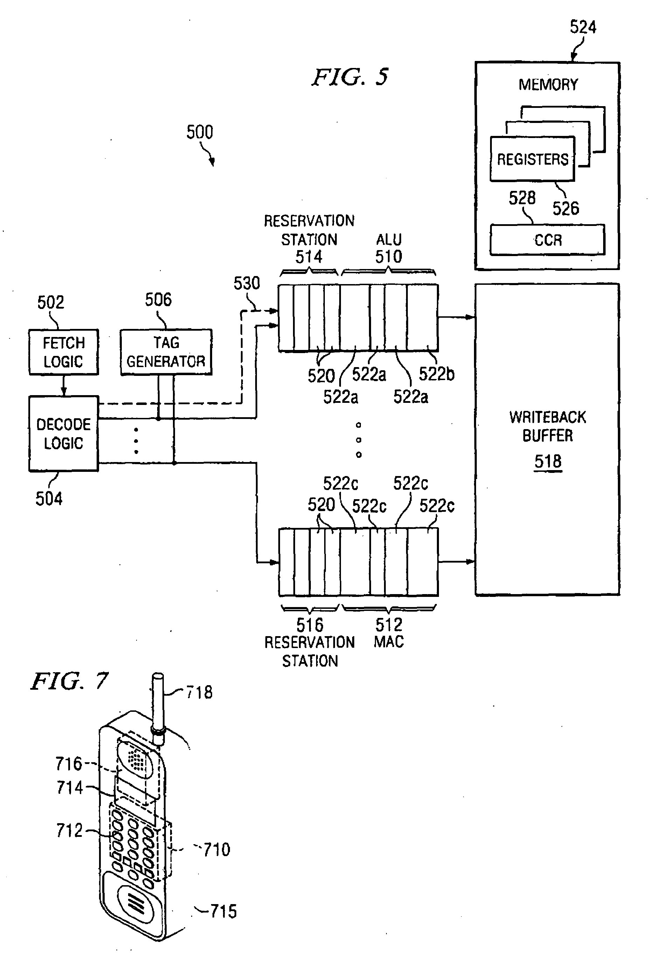

Shown in FIG. 5 is such an implementation of the centralization technique in a multiple-issue, superscalar, out-of-order processor. A superscalar processor is one in which multiple instructions are executed within a single clock cycle. FIG. 5 shows a processor 500 comprising a fetch logic 502, a decode logic (e.g., decode queue) 504, and a tag generator 506. The processor 500 comprises a plurality of execution units. Shown are execution units 510, 512. Execution unit 510 preferably is an ALU 510, and execution unit 512 preferably is a MAC 512. The processor 500 may comprise other execution units, such as a L/S unit, additional ALUs, etc. Each execution unit, such as the ALU 510 and the MAC 512, has a reservation station located in front of the execution unit. ALU 510 has a corresponding reservation station 514, and MAC 512 has a corresponding reservation station 516. A reservation station is a buffer comprising one or more entries 520, each entry corresponding to a separate instruction and, in some embodiments, operands of the instructions. The processor 500 also comprises a write-back buffer 518 coupled to each of the execution units 510, 512, and possibly additional execution units (not specifically shown). The processor 500 further comprises a memory 524 comprising registers 526 and a CCR 528. Further information on superscalar processors is provided in "Superscalar Microprocessor Architecture," U.S. Patent No. 5,603,047.

An instruction fetched from a storage unit (e.g., memory) by the fetch logic 502 is transferred to the decode logic 504 to be decoded. After the instruction has been decoded, the instruction is transferred to the appropriate reservation station, based on the type of instruction. For instance, an arithmetic instruction is transferred to the reservation station 514 of the ALU 510. Similarly, a multiplication instruction is transferred to the reservation station 516 of the MAC 512. Because the processor 500 is a superscalar processor, more than one instruction is processed at a time (e.g., in a clock cycle).

Each instruction transferred to a reservation station 514, 516 is stored in an entry of the reservation station 514, 516, waiting for one or more operands corresponding to the instruction. In some embodiments, an instruction may wait in a reservation station until some or all execution requirements are met: operands needed by the instruction are made available to the instruction; any necessary data loads and/or stores have been performed; and the execution unit for which the instruction is scheduled is not busy execution a different instruction. When some or all execution requirements have been met, the instruction is transferred to a corresponding execution unit. Because some instructions in a reservation station 514, 516 may receive corresponding operands before earlier-issued instructions, the instructions may be executed by the execution units in an order different from the order in which the instructions were decoded by the decode logic 504.

Although the instructions may be executed out-of-order, the results generated by executing the instructions preferably are written to the destination storage units (e.g., registers) in the order that the corresponding instructions were decoded. Writing back results to storage units in this order helps to maintain data coherency in the processor 500. Accordingly, after each instruction is decoded by the decode logic 504 and before the instruction is entered into a reservation station, a tag is applied to the instruction by a tag generator 506. This tag, which may take the form of one or more bits, is later used to write a result(s) of the instruction in the order that the instruction was decoded, as described further below. The scope of disclosure is not limited to applying a tag of any particular form or size. Instead, any suitable mechanism that may be used to arrange the results of out-of-order instructions in order may qualify as a "tag." Further, the scope of disclosure is not limited to tagging an instruction at any particular location in the processor pipeline shown in FIG. 5. For instance, an instruction may be tagged by the tag generator 506 prior to being decoded, after being decoded, prior to being stored in the reservation station, after being stored in the reservation station, etc.

Each execution unit comprises a plurality of stages. As previously explained, the number of stages in a particular execution unit determines the depth of the execution unit. The ALU 510 comprises a plurality of stages 522a, and a last stage 522b. Similarly, the MAC 512 comprises a plurality of stages 522c. The centralization technique used in the superscalar processor 500 is similar to that used in the processor 100. Specifically, the centralization technique comprises reading from the CCR 528 in a single execution unit, preferably the ALU 510. More particularly, the centralization technique comprises reading from the CCR 528 in a single stage of the single execution unit. The centralization technique also comprises writing to the CCR 528 at or about the same time as when the single stage occurs. This single stage preferably is the latest stage, among most or all stages of most or all of the execution units in the processor 500, during which any CCR 528 bit is generated for a particular instruction. This single stage preferably is last stage (i.e., stage 522b) of the ALU 510. By centralizing most or all CCR 528 read and write operations in this manner, data coherency problems are reduced or eliminated. Because superscalar processors such as the processor 500 may comprise two or more ALUs (not specifically shown), some or all of these ALUs may be used to check the CCR 528 as described above.

An illustrative example of the implementation of the centralization technique in the superscalar processor 500 follows. Assume two instructions A and B are fetched by the fetch logic 502. Instruction A is as follows:
ADD R0, R1, R2
(5)
and instruction B is as follows:
MULT R4, R5, R6 (C != 0)
(6)
and further assume that instruction B is predicated on a CCR 528 bit (i.e., bit C) which is altered by the execution of instruction A. In this case, instruction A is fetched by the fetch logic 502 before the instruction B is fetched by the fetch logic 502. Instruction A is decoded by the decode logic 504, which decode logic 504 determines that the instruction A is to be executed by the ALU 510. Accordingly, the instruction A is tagged by the tag generator 506 and is sent to the reservation station 514 of the ALU 510. Similarly, instruction B is decoded by the decode logic 504, which decode logic 504 determines that the instruction B is to be executed by the MAC 512. Accordingly, the instruction B is tagged by the tag generator 506 and is sent to the reservation station 516 of the MAC 512. Instructions A and B may be tagged by the tag generator 506 in any suitable manner, so long as the instructions A, B are tagged such that the chronological order in which the instructions A, B were decoded is affirmed. For instance, instruction A may be tagged with a pair of bits "00" and instruction B may be tagged with a pair of bits "01." As previously mentioned, the scope of disclosure is not limited to tagging instructions using any particular technique. Bits reflecting the conditional statement of instruction B (i.e., (C != 0)) also are transferred to the reservation station 514 (as indicated by dotted arrow 530) to be compared against the CCR 528 as described further below. In alternate embodiments, bits reflecting the conditional statement of instruction B may be forwarded to the ALU 510 from the write-back buffer 518 after the instruction B has been executed and the results, as well as the conditional statement, have been stored to the write-back buffer 518.

Once the instructions A, B are stored in entries of the reservation stations 514, 516, respectively, the operands used by each of the instructions A, B are retrieved. In particular, because instruction A uses operands R1 and R2, contents of registers R1 and R2 are obtained from registers 526 and are provided to the reservation station 514. Similarly, because instruction B uses operands R5 and R6, contents of registers R5 and R6 are obtained from registers 526 and are provided to the reservation station 514. In this way, the operands needed by each of the instructions A, B are provided to the reservation stations 514, 516, respectively. Once most or preferably all execution requirements of the instruction A are satisfied, the instruction A is executed by the ALU 510. For instance, once the operands R1, R2 are provided to the reservation station 514, and once it is determined that the ALU 510 is not busy executing another instruction, the instruction A is provided to the ALU 510 for execution. Likewise, once most or preferably all execution requirements of the instruction B are satisfied, the instruction B is executed by the MAC 512.

In some cases, the instructions A, B may become out-of-order, such as when the execution requirements of instruction B are satisfied before the execution requirements of instruction A are satisfied. For instance, the reservation station 516 may comprise the operands R5, R6 needed by instruction B, but the reservation station 514 may not comprise the operands R1, R2 needed by instruction A. In such a case, the instruction B, which was decoded after instruction A, is executed before instruction A. Thus, the instructions A, B are executed out-of-order. Such a scenario may prove problematic in that instruction B is intended (e.g., by a software programmer) to be executed after instruction A, since instruction B is intended to be predicated on the CCR 528 bit C as altered by instruction A. However, in this case, if instruction B is executed before instruction A gets a chance to be executed and to alter the status of the CCR 528 bit C, then the instruction B will undesirably be predicated on the status of the bit C as it exists prior to being altered by instruction A. To avoid such problems, the results generated by executing

instruction B are not written to destination register R4. Instead, the results generated by executing instruction B are forwarded to the write-back buffer 518. These results wait in the write-back buffer 518 for instruction A to finish executing, so that the conditional statement upon which instruction B is predicated (i.e., (C != 0) will properly be based on the CCR 528 bit C as altered by instruction A.

Accordingly, once some or preferably all execution requirements of the instruction A are satisfied, the instruction A is executed by the ALU 510. The instruction A progresses through the stages 522a of the ALU 510, until stage 522b is encountered. In stage 522b, the conditional statement (C != 0) of instruction B is compared against the bit C of the CCR 528, as altered by the execution of instruction A by the ALU 510. The specific mechanism by which this comparison is performed is substantially similar to that shown in FIG. 3 and thus is not repeated here. In general terms, if the ALU 510 determines the conditional statement of instruction B to be true, then the ALU 510 generates a signal (e.g., an asserted signal) and transfers the signal to the write-back buffer 518 indicating that the conditional statement of instruction B is true. Upon receiving such a signal, the write-back buffer 518 writes the results of instruction B, presently stored in the buffer 518, to the destination register R4. However, if a signal is received indicating that the conditional statement of instruction B is false, then the results of instruction B, stored in the buffer 518 are discarded and are not written to destination register R4.

As previously mentioned, because instruction B is "ahead" of instruction A, the processor 500 is executing these instructions out-of-order. The instructions A, B also may be executed out-of-order if, for instance, the instructions are being simultaneously executed (i.e., in different execution units) and instruction B finishes executing before instruction A. For this reason, it is preferable that prior to writing the results of instruction B to the destination register R4 and/or prior to discarding the results of instruction B, that the results of instruction A be written to the write-back buffer 518. Once the results of instruction A and instruction B are written to the write-back buffer 518, and also once the status of the conditional statement of instruction B is written to the write-back buffer 518, the results of instructions A, B are either written to their respective destination registers or are discarded. Specifically, the results of instructions A, B are written to their respective destination registers in the order specified by the tags associated with instructions A, B.

Because the tag generator 506 mentioned above tagged the instructions A, B in the order in which they were decoded, the results of instructions A, B are written to their destination registers in the same order. Thus, the write-back buffer 518 "checks in" the tag associated with instruction A and proceeds to write the results of instruction A to destination register R0. The write-back buffer 518 then "checks in" the tag associated with instruction B and, assuming that the conditional statement of instruction B is true, the buffer 518 writes the results of instruction B to the destination register R4. Also, if the conditional statement is true, then any CCR 528 bit(s) generated during execution of the instruction B also may be written to the CCR 528. Otherwise, if the conditional statement of instruction B is false, the buffer 518 preferably discards the results of instruction B. In this way, the write-back buffer 518 prevents data coherency problems and maintains the appearance of sequential instruction execution.

The data forwarding technique described above also may be implemented in out-of-order, superscalar machines as in FIG. 5. For the system 500, both the results from the ALU 510 as well as the MAC 512 may be forwarded to the reservation station of the execution unit that will execute a subsequent instruction in question, where the subsequent instruction is dependent on one of these results. However, neither of the results stored in the reservation station is considered valid, and thus neither of the results is used by the execution unit, until the appropriate conditional statements are evaluated as previously described.

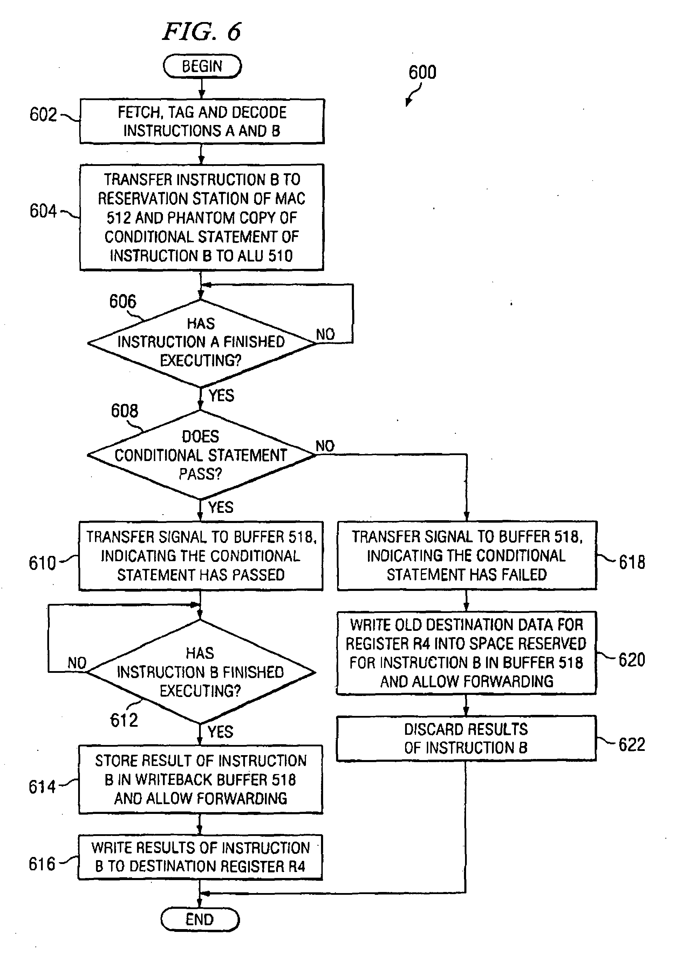

FIG. 6 shows a process 600 by which the centralization technique for a superscalar processor, such as processor 500, may be implemented. The process 600 begins by fetching, decoding and tagging instructions A, B (block 602). The process 600 continues by transferring instruction B to reservation station 516 of the MAC 512 (block 604). A phantom copy of the conditional statement (i.e., (C != 0)) of instruction B is transferred to the reservation station 514 of the ALU 510 (block 606). The process 600 then comprises executing instruction A and determining whether the instruction A has finished executing (block 608).

If the instruction A has not finished executing (block 606), then the process 600 comprises continuing to execute instruction A until it has been fully executed (block 606). However, if the instruction A has finished executing, then the process 600 comprises determining whether the conditional statement has passed (block 608). Evaluation of the conditional statement preferably occurs in a clock cycle after the clock cycle in which the instruction A is executed. If the conditional statement has passed, the process 600 comprises transferring a signal to buffer 518, indicating that the conditional statement has passed (block 610). The process 600 further comprises determining whether the instruction B has finished executing (block 612). If the instruction B has not finished executing, the process 600 comprises executing instruction B until it has been fully executed (block 612). Otherwise, the process 600 comprises storing the result of executing instruction B in the write-back buffer 518 and allowing data forwarding (block 614). The process 600 then comprises writing the results of the execution of instruction B to the destination register R4 (block 616), preferably in the order in which instructions are fetched.

In case the conditional statement does not pass (block 608), the process 600 comprises transferring a signal to buffer 518 indicating that the conditional statement has failed (block 618). The process 600 then comprises writing the old destination data for register R4 into the space reserved for instruction B in the buffer 518 and forwarding the result data as described above (block 620). Finally, the process 600 comprises discarding the results of instruction B (block 622), since the conditional statement failed (block 608). The scope of disclosure is not limited to performing the steps of the process 600 in the order shown. Instead, the steps may be performed in any suitable order, and one or more of the steps may be omitted or repeated as necessary. Especially because the process 600 is implemented in out-of-order, superscalar processors, the steps of process 600 may be reordered to occur in a different sequence, and some of the steps may even occur simultaneously. For example, in some embodiments, the steps shown in blocks 612, 614 may be performed substantially simultaneously with those shown in blocks 606, 608, 610. Blocks 612, 614 may even be completed before block 610, in which case the process 600 may comprise completing block 610 and then proceeding to block 616. Additional steps also may be added, as necessary.

Processors 100 and/or 500 may be implemented in a mobile cell phone 715, such as that shown in FIG. 7. As shown, the battery-operated, mobile communication device includes an integrated keypad 712 and display 714. The processor 100 and/or processor 500 and/or other components may be included in electronics package 710 connected to the keypad 712, display 714, and radio frequency ("RF") circuitry 716. The RF circuitry 716 may be connected to an antenna 718.

The above discussion is meant to be illustrative of the principles and various embodiments of the present invention. Numerous variations and modifications will become apparent to those skilled in the art once the above disclosure is fully appreciated. It is intended that the claimed invention be interpreted to embrace all such variations and modifications.

## Claims

1. A processor (100; 500), comprising:
a memory (114; 524) comprising a condition code register (CCR) (116; 528); and
a plurality of execution units (104, 106,108, 110; 510, 512) coupled to the memory, each execution unit comprising multiple stages (112a, 112b, 112c, 112d; 522a, 522b, 522c), wherein the execution units are provided with instructions, at least some of which are predicated on a conditional statement (C);
**characterized in that** on execution of an instruction (B) predicated on a conditional statement (C) by any of the plurality of execution units (104, 106, 108, 110; 510, 512), the conditional statement (C) of the instruction (B) is provided to a single execution unit (108; 510) of the plurality of execution units, the single execution unit (108; 510) being operable to compare the conditional statement (C) of the instruction to the CCR (116; 528) in a single stage (112d; 522b) of the single execution unit (108; 510).

2. The processor of Claim 1, wherein if the conditional statement (C) of the instruction is true, the single execution unit (108; 510) is arranged to transfer a signal to the execution unit (104, 106, 108, 110; 510, 512) that is executing the instruction predicated by a conditional statement to store the result generated by execution of the instruction in memory (114; 524) and the CCR bit generated by execution of the instruction in the CCR (116; 528).

3. The processor of Claim 1 or 2, wherein if the conditional statement (C) of the instruction is false, the single execution unit (108; 510) is arranged to transfer a signal to the execution unit (104, 106, 108, 110; 510, 512) that is executing the instruction predicated by a conditional statement to discard a result and CCR bit generated by execution of the instruction.

4. The processor of any of Claims 1 - 3, wherein the single execution unit (108; 504) is an arithmetic logic unit (ALU).

5. The processor of any preceding claim, further comprising:
a fetch logic (98; 502) adapted to fetch instructions from storage;
a decode logic (102; 504) coupled to the fetch logic (98) and to the plurality of execution units (104, 106,108, 110; 510, 512) and adapted to decode fetched instructions.

6. The processor of any preceding claim, wherein the single stage (112d; 522b) in which the conditional statement (C) of the instruction is compared to the CCR (116; 528) is the last stage, among the plurality of stages, in which any CCR bit is generated.

7. The processor of any preceding claim, further comprising:
a write-back buffer (518) coupled to the plurality of execution units (510, 512) and adapted to store the result of execution of the instruction (B) predicated on a conditional statement (C), the write-back buffer (518) being operable to provide the conditional statement (C)to the single execution unit to compare the conditional statement to the CCR bit and wherein, if the conditional statement is true, the write-back buffer (518) is operable to transfer the results to a destination register corresponding to the instruction (B) predicated on a conditional statement (C).

8. A method, comprising:
decoding a first instruction (A) and a second instruction (B), said second instruction (B) comprising a conditional statement (C) predicated on a condition code register (CCR) bit;
executing the first instruction (A) in a first execution unit (108; 510) and the second instruction (B) in a second execution unit (106; 512), each of the first and second execution units comprising a plurality of stages (112a, 112b, 112c, 112d; 522a, 522b, 522c); and
comparing the conditional statement (C) to a status of the CCR (116) bit within a single stage (112d; 522b) of the first execution unit (108) to determine whether the conditional statement (C) is true or false;
wherein said single stage (112d; 522b) is the last stage, among the plurality of stages in the first and second execution units (104, 108; 510, 512), in which a bit corresponding to a CCR (116; 528) is generated.

9. The method of Claim 8, wherein executing the second instruction (B) comprises generating a result and a value corresponding to the CCR (116; 528).

10. The method of Claim 9, further comprising storing the result to a destination register and storing the value corresponding to the CCR to the CCR (116; 528) if the conditional statement (C) is true.

11. The method of Claims 9 or 10, further comprising storing a value corresponding to the CCR to the CCR (116; 528) prior to comparing the conditional statement (C) to the status of the CCR bit, wherein said value corresponding to the CCR is generated by executing the first instruction (A).

12. The method of any of Claims 8 to 11, wherein decoding the first instruction (A) and the second instruction (B) comprises decoding the first and second instructions in one of a single-issue processor pipeline (100) or a superscalar processor pipeline (500).

13. The method of any of Claims 8 to 12, further comprising generating a result (388) by executing at least one of the first or second instructions, wherein said result is forwarded to an execution unit.

## Patentansprüche

1. Prozessor (100, 500), umfassend:
einen Speicher (114, 524), umfassend ein Bedingungscode-Register (CCR) (116, 528); und
eine Mehrzahl von an den Speicher gekoppelten Ausführungseinheiten (104, 106, 108, 110; 510, 512), wobei jede Ausführungseinheit mehrere Stufen (112a, 112b, 112c, 112d; 522a, 522b, 522c ) umfasst, wobei die Ausführungseinheiten mit Anweisungen versorgt werden, von denen zumindest einige auf einer Bedingung (C) basieren;
**dadurch gekennzeichnet, dass** bei Ausführung einer auf einer Bedingung (C) beruhenden Anweisung (B) durch irgendeine der Mehrzahl von Ausführungseinheiten (104, 106, 108, 110; 510, 512), die Bedingung (C) der Anweisung (B) an eine einzelne Ausführungseinheit (108, 510) der Mehrzahl von Ausführungseinheiten bereitgestellt wird, wobei die einzelne Ausführungseinheit (108, 510) betreibbar ist, um die Bedingung (C) der Anweisung mit dem CCR (116, 528) in einer einzelnen Stufe (112d, 522b) der einzelnen Ausführungseinheit (108, 510) zu vergleichen.

2. Prozessor gemäß Anspruch 1, wobei, falls die Bedingung (C) der Anweisung wahr ist, die einzelne Ausführungseinheit (108, 510) vorgesehen ist, um ein Signal zur Ausführungseinheit (104, 106, 108, 110; 510, 512), welche die Anweisung basierend auf einer Bedingung ausführt, zu übermitteln, um das Ergebnis, welches durch die Ausführung der Anweisung erzeugt wurde, im Speicher (114, 524) und das CCR-Bit, welches durch die Ausführung der Anweisung erzeugt wurde, im CCR (116, 528) zu speichern.

3. Prozessor gemäß Anspruch 1 oder 2, wobei, falls die Bedingung (C) der Anweisung falsch ist, die einzelne Ausführungseinheit (108, 510) vorgesehen ist, um ein Signal zur Ausführungseinheit (104, 106, 108, 110; 510, 512), welche die Anweisung basierend auf einer Bedingung ausführt, zu übermitteln, um ein Ergebnis und CCR-Bit, welche durch die Ausführung der Anweisung erzeugt wurden, zu verwerfen.

4. Prozessor gemäß einem der Ansprüche 1 bis 3, wobei die einzelne Ausführungseinheit (108, 502) eine arithmetische Logikeinheit (ALU) ist.

5. Prozessor gemäß einem der vorhergehenden Ansprüche, ferner umfassend;
eine Abruf-Logik (98, 502) angepasst, um Anweisungen aus dem Speicher zu holen;
eine Dekodierungs-Logik (102, 504), welche mit der Abruf-Logik (98) und der Mehrzahl von Ausführungseinheiten (104, 106, 108, 110; 510, 512) gekoppelt ist und angepasst ist, um die abgerufenen Anweisungen zu dekodieren.

6. Prozessor gemäß einem der vorhergehenden Ansprüche, wobei die einzelne Stufe (112d, 522d), in der die Bedingung (C) der Anweisung mit dem CCR (116, 528) verglichen wird, die letzte Stufe der Mehrzahl von Stufen ist, in denen ein CCR-Bit erzeugt wird.

7. Prozessor gemäß einem der vorhergehenden Ansprüche, ferner umfassend:
einen Rückschreibepuffer (518), der an die Mehrzahl von Ausführungseinheiten (510, 512) gekoppelt ist und angepasst ist, um das Ergebnis der Ausführung der Anweisung (B) basierend auf einer Bedingung (C) zu speichern, wobei der Rückschreibepuffer (518) betreibbar ist, um die Bedingung (C) der einzelnen Ausführungseinheit bereitzustellen, um die Bedingung mit dem CCR-Bit zu vergleichen, wobei, falls die Bedingung wahr ist, der Rückschreibepuffer (518) betreibbar ist, um die Ergebnisse an ein Bestimmungsregister, entsprechend der Anweisung (B) basierend auf einer Bedingung (C) zu übermitteln.

8. Verfahren, umfassend:
Dekodierung einer ersten Anweisung (A) und einer zweiten Anweisung (B), wobei die zweite Anweisung (B) eine auf einem Bedingungscode-Register (CCR) basierende Bedingung (C) umfasst;
Ausführung der ersten Anweisung (A) in einer ersten Ausführungseinheit (108, 510) und der zweiten Anweisung (B) in einer zweiten Ausführungseinheit (106, 512), wobei die erste und die zweite Ausführungseinheit jeweils eine Mehrzahl von Stufen (112a, 112b, 112c, 112d; 522a, 522b, 522c) umfasst; und
Vergleichen der Bedingung (C) mit einem Zustand des CCR(116)-Bit in einer einzelnen Stufe (112d, 522b) der ersten Ausführungseinheit (108), zur Bestimmung, ob die Bedingung wahr oder falsch ist;
wobei die einzelne Stufe (112d, 522b) die letzte Stufe der Mehrzahl von Stufen der ersten und zweiten Ausführungseinheit (104, 108; 510, 512) ist, in denen das dem CCR (116, 528) entsprechende Bit erzeugt wird.

9. Verfahren nach Anspruch 8, wobei die Ausführung der zweiten Anweisung (B) das Erzeugen eines Ergebnisses und eines dem CCR (116; 528) entsprechenden Werts umfasst.

10. Verfahren nach Anspruch 9, ferner umfassend Speichern des Ergebnisses in einem Bestimmungsregister und Speichern des dem CCR entsprechenden Werts im CCR (116; 528), falls die Bedingung (C) wahr ist.

11. Verfahren gemäß Anspruch 9 oder 10, ferner umfassend Speichern eines dem CCR entsprechenden Werts im CCR (116; 528) vor dem Vergleichen der Bedingung (C) mit dem Zustand des CCR-Bits, wobei der dem CCR entsprechende Wert durch die Ausführung der ersten Anweisung (A) erzeugt wurde.

12. Verfahren gemäß einem der Ansprüche 8 bis 11, wobei das Dekodieren der ersten Anweisung (A) und der zweiten Anweisung (B) das Dekodieren der ersten und zweiten Anweisung in einer der Pipelines Einzel-Issue-Prozessorpipeline (100) und Superskalar-Prozessorpipeline (500) umfasst.

13. Verfahren gemäß einem der Ansprüche 8 bis 12, ferner umfassend die Erzeugung eines Ergebnisses (388) durch Ausführung wenigstens einer der ersten und zweiten Anweisung, wobei das Ergebnis an eine Ausführungseinheit weitergeleitet wird.

## Revendications

1. Processeur (100 ; 500) comprenant :
une mémoire (114 ; 524) comprenant un registre de code de condition (CCR) (116 ; 528) ; et
une pluralité d'unités d'exécution (104, 106, 108, 110 ; 510, 512) couplées à la mémoire, chaque unité d'exécution comprenant de multiples niveaux (112a, 112b, 112c, 112d ; 522a, 522b, 522c), dans lequel les unités d'exécution reçoivent des instructions, certaines d'entre elles au moins étant basées sur une instruction conditionnelle (C) ;
**caractérisé en ce qu'**au moment de l'exécution d'une instruction (B) basée sur une instruction conditionnelle (C) par une quelconque unité d'exécution sélectionnée parmi la pluralité des unités d'exécution (104, 106, 108, 110 ; 510, 512), l'instruction conditionnelle (C) de l'instruction (B) est délivrée à une seule unité d'exécution (108 ; 510) de la pluralité des unités d'exécution, l'unique unité d'exécution (108 ; 510) pouvant être exploitée pour comparer l'instruction conditionnelle (C) de l'instruction au CCR (116 ; 528) dans un seul niveau (112d ; 522b) de l'unique unité d'exécution (108; 510).

2. Processeur selon la revendication 1, dans lequel si l'instruction conditionnelle (C) de l'instruction est vraie, l'unique unité d'exécution (108 ; 510) est configurée pour transférer un signal à l'unité d'exécution (104, 106, 108, 110 ; 510, 512) qui exécute l'instruction affirmée par une instruction conditionnelle afin d'enregistrer le résultat généré par l'exécution de l'instruction dans la mémoire (114 ; 524) et le bit du CCR généré par l'exécution de l'instruction dans le CCR (116 ; 528).

3. Processeur selon la revendication 1 ou la revendication 2, dans lequel si l'instruction conditionnelle (C) de l'instruction est fausse, l'unique unité d'exécution (108 ; 510) est configurée pour transférer un signal à l'unité d'exécution (104, 106, 108, 110 ; 510, 512) qui exécute l'instruction affirmée par une instruction conditionnelle afin de rejeter un résultat et le bit du CCR généré par l'exécution de l'instruction.

4. Processeur selon l'une quelconque des revendications 1 à 3, dans lequel l'unique unité d'exécution (108 ; 504) est une unité de logique arithmétique (ALU).

5. Processeur selon l'une quelconque des revendications précédentes comprenant en outre :
une logique d'extraction (98 ; 502) conçue pour extraire des instructions de la mémoire ;
une logique de décodage (102 ; 504) couplée à la logique d'extraction (98) et à la pluralité des unités d'exécution (104, 106, 108, 110 ; 510, 512) et conçue pour décoder les instructions extraites.

6. Processeur selon l'une quelconque des revendications précédentes, dans lequel le niveau unique (112d ; 522b) dans lequel l'instruction conditionnelle (C) de l'instruction est comparée au CCR (116 ; 528) est le dernier niveau, parmi la pluralité des niveaux, dans lequel un bit de CCR quelconque est généré.

7. Processeur selon l'une quelconque des revendications précédentes comprenant en outre :
un tampon de réécriture (518) couplé à la pluralité des unités d'exécution (510, 512) et conçu pour enregistrer le résultat de l'exécution de l'instruction (B) basée sur une instruction conditionnelle (C), le tampon de réécriture (518) pouvant être exploité pour délivrer l'instruction conditionnelle (C) à l'unique unité d'exécution, afin de comparer l'instruction conditionnelle au bit du CCR et dans lequel, si l'instruction conditionnelle est vraie, le tampon de réécriture (518) peut être exploité pour transférer les résultats vers un registre de destination correspondant à l'instruction (B) basée sur une instruction conditionnelle (C).

8. Procédé consistant à :
décoder une première instruction (A) et une seconde instruction (B), ladite seconde instruction (B) comprenant une instruction conditionnelle (C) basée sur un bit du registre de code de condition (CCR) ;
exécuter la première instruction (A) dans une première unité d'exécution (108 ; 510) et la seconde instruction (B) dans une seconde unité d'exécution (106 ; 512), chacune des première et seconde unités d'exécution comprenant une pluralité de niveaux (112a, 112b, 112c, 112d ; 522a, 522b, 522c) ; et
comparer l'instruction conditionnelle (C) à un état du bit du CCR (116) à l'intérieur d'un niveau unique (112d ; 522b) de la première unité d'exécution (108), afin de déterminer si l'instruction conditionnelle (C) est vraie ou fausse ;
dans lequel ledit niveau unique (112d ; 522b) est le dernier niveau, parmi la pluralité des niveaux de la première et de la seconde unités d'exécution (104, 108 ; 510, 512), dans lequel un bit correspondant à un CCR (116 ; 528) est généré.

9. Procédé selon la revendication 8, dans lequel l'exécution de la seconde instruction (B) consiste à générer un résultat et une valeur correspondant au CCR (116 ; 528).

10. Procédé selon la revendication 9 consistant en outre à enregistrer le résultat sur un registre de destination et à enregistrer la valeur correspondant au CCR sur le CCR (116 ; 528), si l'instruction conditionnelle (C) est vraie.

11. Procédé selon la revendication 9 ou la revendication 10 consistant en outre à enregistrer une valeur correspondant au CCR sur le CCR (116 ; 528) avant de comparer l'instruction conditionnelle (C) à l'état du bit du CCR, dans lequel ladite valeur correspondant au CCR est générée en exécutant la première instruction (A).

12. Procédé selon l'une quelconque des revendications 8 à 11, dans lequel le décodage de la première instruction (A) et de la seconde instruction (B) consiste à décoder les première et seconde instructions dans un pipeline de processeur à émission unique (100) ou dans un pipeline de processeur superscalaire (500).

13. Procédé selon l'une quelconque des revendications 8 à 12 consistant en outre à générer un résultat (388) en exécutant au moins l'une des première ou seconde instructions, dans lequel ledit résultat est envoyé à une unité d'exécution.
